# EUROPÄISCHE PATENTANMELDUNG

(11) **EP 1 186 452 A2**
(43) Veröffentlichungstag der Anmeldung: **13.03.2002**
(21) Anmeldenummer: 01121152.1
(22) Anmeldetag: 04.09.2001
(51) Int. Cl.: B60C 23/00

(54) **Anordnung mit einem Rad und einer Vorrichtung zum Befüllen oder Entlüften eines Reifens eines Fahrzeugs, insbesondere Traktors**

(30) Priorität: 12.09.2000 DE 10044886
(71) Anmelder: GKN Walterscheid GmbH, 53797 Lohmar (DE)
(72) Erfinder: Nienhaus, Clemens, Dipl.-Ing., 53819 Neunkirchen-Seelscheid (DE)
(74) Vertreter: Harwardt, Günther, Dipl.-Ing.

(57) **Zusammenfassung**

Die Erfindung betrifft eine Anordnung mit einem Rad 1 für einen Traktor. Dieses umfaßt eine Felge 2 und einen Radkörper 3 zur Verbindung mit dem Radflansch des Traktors. Ferner ist eine Vorrichtung 8 zum Befüllen oder Entlüften des auf dem Rad 1 aufsitzenden Reifens vorgesehen. Diese umfaßt ein Gehäuse 14, das mit dem Radkörper 3 fest verbunden ist und sich mit diesem dreht. In diesem Gehäuse 14 ist ein Innenteil 21 gelagert. Zwischen beiden ist eine Ringkammer 25 ausgebildet. Die Ringkammer 25 ist mit dem ersten Anschluß 10 an der Felge 2 über eine Leitung 12 und einen zweiten Anschluß 11, dem ein Ventil 9 zugeordnet ist, verbunden. Ferner ist die Ringkammer 25 über einen dritten Leitungsanschluß 29 und über ein Hauptventil 30 mit einem Drucklufterzeuger verbindbar.

## Beschreibung

Die Erfindung betrifft eine Anordnung, umfassend ein Rad für ein Fahrzeug, insbesondere Traktor, das eine Felge aufweist, die zur Aufnahme eines mit Luft befüllbaren Reifens dient und mit einer Vorrichtung zum Befüllen oder Entlüften des Reifens, die aus einem Gehäuse und einem Innenteil besteht, so daß eine Drehdurchführung gebildet wird und einerseits mit einem Druckerzeuger verbindbar ist und andererseits über eine Leitung mit dem zu füllenden Innenraum des Reifens verbunden ist.

Eine Reifenfüllanlage ist beispielsweise in der DE-OS 1 907 082 beschrieben. Aus dieser ist auch bereits herleitbar, daß es für Fahrzeuge mit relativ hohen Umfangsgeschwindigkeiten notwendig ist, die Drehdurchführung während des Normalbetriebes, d.h. während der Nichtbetätigung der Reifenfüllanlage so zu schalten, daß kein Druck ansteht, da erkannt wurde, daß Probleme an den Dichtelementen der Drehverbindung auftreten. Diese Problematik wird besonders deutlich, wenn große Durchmesser vorhanden sind, wie das beispielsweise bei Traktoren der Fall ist.

Bei Traktoren ist eine Veränderung des Luftdrucks im Reifen besonders von Bedeutung, da bei der Arbeit auf dem Feld mit einem niedrigeren Reifendruck eine geringere Bodenverdichtung und darüber hinaus eine höhere Traktion erzielbar sind. In der Fachzeitschrift profi-magazin für agrartechnik, 10/1995 "Der Luftdruck im Reifen: Kleine Ursache, große Wirkung" sind verschiedene Regelanlagen zu entnehmen. Danach sind die Drehübertrager entweder je nach Achstyp an der Innen- oder Außenseite des Rades dem Radflansch zugeordnet. Bei preiswerteren Systemen erfolgt die Luftzuführung außen am Reifen vorbei bis zur Drehdurchführung. Bei der Anordnung als Zwischenflansch zwischen dem Rad und dem Radflansch erfolgt die Befestigung der Drehdurchführung über die Radschrauben. Diese Ausführung hat den Vorteil, daß keine außen freiliegenden Leitungen vorhanden sind. Die jedoch ohnehin kritische Schraubverbindung wird durch die vergrößerte freie Biegelänge der Radschrauben noch höher belastet. Von Nachteil ist auch, daß die bei einem Radwechsel störenden Schläuche weiterhin innen am Radkörper vorhanden sind, da beim Radwechsel eine flexible Verbindung benötigt wird.

Der Erfindung liegt daher die Aufgabe zugrunde, eine Anordnung zu entwickeln, bei der Beschädigungen weitestgehend vermieden werden.

Diese Aufgabe wird erfindungsgemäß durch eine Anordnung gelöst, umfassend
- ein Rad für ein Fahrzeug, insbesondere Traktor, das eine Felge aufweist, die zur Aufnahme eines mit Luft befüllbaren Reifens dient und dazu einen ersten Leitungsanschluß zur Luftdurchleitung besitzt, das ferner einen Radkörper aufweist, an dem die Felge angebracht ist und der zur Verbindung mit einem Radflansch des Fahrzeuges dient;
- eine Vorrichtung zum Befüllen oder Entlüften des Reifens, die ein Gehäuse aufweist, das mit dem Radkörper fest verbunden ist, eine Bohrung und einen zweiten Leitungsanschluß besitzt, die ferner eine Leitung aufweist, welche den ersten Leitungsanschluß mit dem zweiten Leitungsanschluß verbindet, die weiter ein Innenteil aufweist, welches in der Bohrung des Gehäuses drehbeweglich aufgenommen ist, welches ferner über einen dritten Leitungsanschluß zur Verbindung mit einem Anschluß zu einem Druckerzeuger verfügt und über Haltemittel verfügt, die zur drehfesten Abstützung des Innenteiles am Fahrzeug bestimmt sind, die ferner ein steuerbares Ventil aufweist, das dem zweiten Leitungsanschluß zugeordnet ist, wobei zwischen dem Gehäuse und dem Innenteil eine Ringkammer ausgebildet ist, mit der der zweite Leitungsanschluß und der dritte Leitungsanschluß verbunden sind, und wobei der dritte Leitungsanschluß mit der zum Druckerzeuger führenden Leitung durch eine Steckkupplung und ein Hauptventil verbunden ist.

Mit dieser Anordnung ist es möglich, eine feste Verrohrung an der Radkörperinnenseite vorzunehmen, die vom Gehäuse zum entsprechenden Leitungsanschluß an der Felge führt. Durch die Steckkupplung kann eine schnelle Verbindung erzielt werden. Darüber hinaus kann diese Verbindung genutzt werden, um als Drehmomentstütze zu dienen, durch die das Innenteil am Traktor undrehbar gehalten wird.

In Ausgestaltung der Erfindung ist vorgesehen, daß das Ventil elektrisch steuerbar ist, daß zwischen dem Gehäuse und dem Innenteil eine Übertragungseinheit für mit dem Ventil verbundene Steuerleitung vorhanden ist, welche über das Innenteil nach außen zu dem Hauptventil und/oder einer Steuereinheit geführt sind.

In Ausgestaltung ist es auch möglich, daß an den dritten Anschluß zunächst eine erste Druckleitung angeschlossen ist, die mit einem Halter als fahrzeugseitige Drehmomentstütze verbindbar ist, so daß das Innenteil undrehbar gehalten ist. Die Steckkupplung ist dem dem dritten Leitungsanschluß entfernten Ende der ersten Druckleitung zugeordnet.

Vorzugsweise ist das Gehäuse ringförmig gestaltet. Es kann ferner mit dem Radkörper lösbar verbunden sein. Die Zuordnung zum Radkörper erfolgt außerhalb der Verbindung des Radkörpers mit dem Radflansch des Traktors, so daß keine negative Beeinflussung der Verbindung des Rades mit dem fahrzeugseitigen Radflansch gegeben ist.

Ein bevorzugtes Ausführungsbeispiel der Erfindung ist in der Zeichnung schematisch dargestellt.

Es zeigt
- Figur 1: ein Rad, teilweise geschnitten dargestellt, in Zuordnung zu dem Radflansch einer aus dem Achsrohr eines Traktors austretenden Achswelle,
- Figur 2: einen Teil der Vorrichtung zum Befüllen oder Entlüften des Reifens im Längsschnitt, im vergrößerten Maßstab dargestellt,
- Figur 3: eine Seitenansicht zu Figur 2,

- Figur 4: einen Schnitt durch die Verbindung zwischen dem Anschluß der Ringkammer und der Anschlußleitung bzw. dem Hauptventil in Form einer Steckkupplung in Zuordnung zu einem Halter, und
- Figur 5: einen Schnitt V-V gemäß Figur 4.

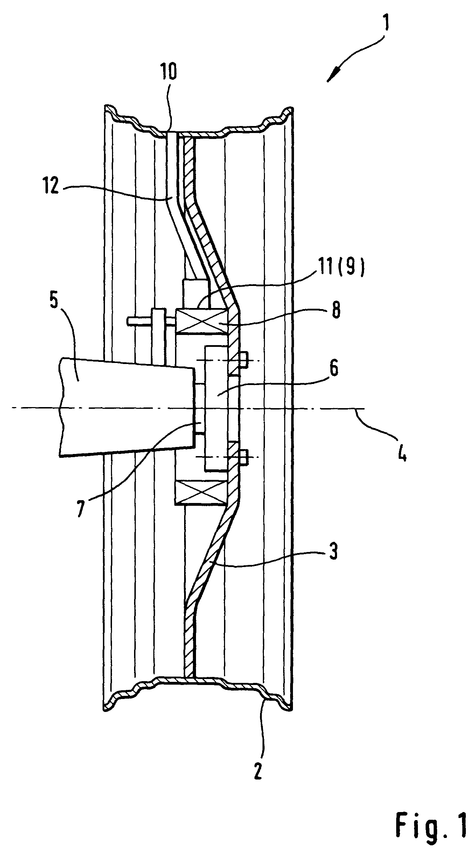

In Figur 1 ist das Rad 1 ohne Reifen dargestellt. Das Rad 1 besteht aus der Felge 2, welche zur Aufnahme eines Reifens dient und dem Radkörper 3, der um die Drehachse 4 an dem Radflansch 6, der aus dem Achsrohr 5 austretenden Achswelle 7 durch Schrauben befestigt ist. Das Rad 1 wird über die Achswelle 7 und den Radflansch 6 drehend um die Drehachse 4 angetrieben. Vom Traktor ist nur das Achsrohr 5 dargestellt. Koaxial um den Radflansch 6 ist am Radkörper 3 eine Drehdurchführung, welche eine Vorrichtung zum Befüllen oder Entlüften des Reifens darstellt, mit dem Radkörper 3 fest verbunden. Zur Vorrichtung zum Befüllen oder Entlüften gehört auch ein erster Leitungsanschluß 10 an der Felge 2, ein zweiter Leitungsanschluß 11 am Gehäuse der Vorrichtung 8 zum Befüllen oder Entlüften, ein damit verbundenes Ventil 9 und eine Leitung 1, 12, welche den ersten Leitungsanschluß 10 mit dem zweiten Leitungsanschluß 11 verbindet. Das Ventil 9 ersetzt gleichzeitig auch das üblicherweise dem Reifen bzw. der Felge zugeordnete Luftventil. Die Luft wird der Vorrichtung 8 von einer zentralen Druckluftversorgung über nicht näher dargestellte Mittel zugeführt.

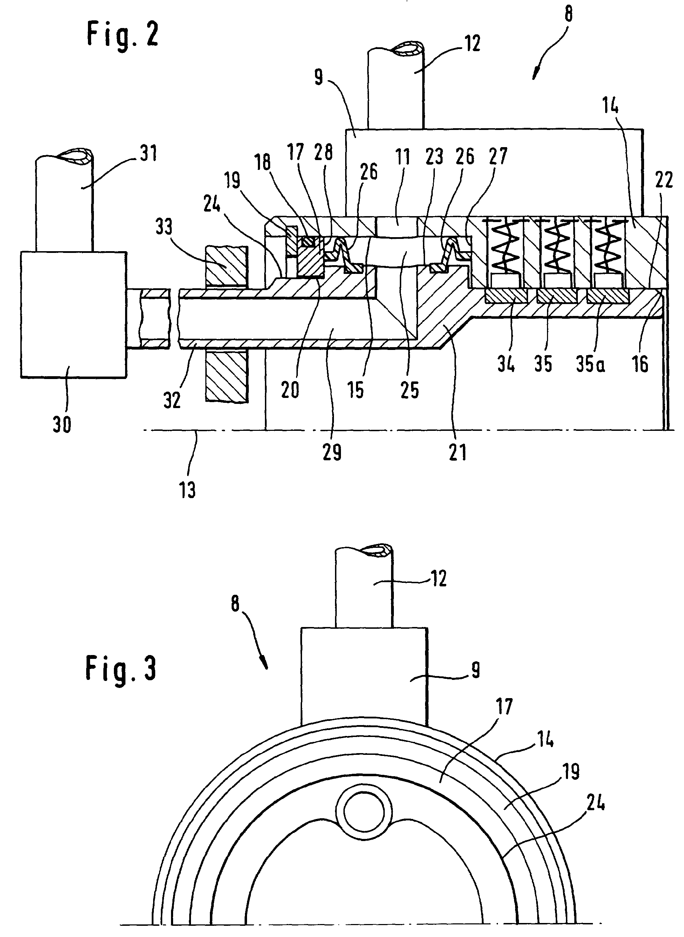

Aus den Figuren 2 und 3 ist die Vorrichtung 8 zum Befüllen oder Entlüften eines Reifens näher ersichtlich. Die Längsachse der Vorrichtung 8 zum Befüllen oder Entlüften eines Reifens ist mit 13 bezeichnet. Die Vorrichtung 8 wird am Radkörper 3 so montiert, daß die Längsachse 13 mit der Drehachse 4 zusammenfällt.

Die Vorrichtung 8 umfaßt ein Gehäuse 14, das ringförmig aufgebaut ist und eine Bohrung 15 aufweist. Rechts neben der Bohrung 15 ist die dazu im Durchmesser reduzierte erste Lagerbohrung 16 erkennbar. Nach links ist die Bohrung 15 durch den Deckel 17 abgeschlossen, der von einem Sicherungsring 19 gehalten wird. Der Deckel 17 ist zur Bohrung 15 hin durch die Dichtung 18 abgedichtet. Ferner weist der Deckel 17 die zweite Lagerbohrung 20 auf, die ebenfalls im Verhältnis zur Lagerbohrung 15 im Durchmesser reduziert ist. In dem Gehäuse 14 ist relativ dazu das Innenteil 21 drehbar gelagert. Das Innenteil 21 weist eine erste Stufenfläche 22 auf, die in der ersten Lagerbohrung 16 drehbar aufgenommen ist. Die zweite Stufenfläche 23 ist im Durchmesser größer bemessen als die erste Stufenfläche 22 und auch größer bemessen als die dritte Stufenfläche 24, mit der das zweite Innenteil 21 in der Lagerbohrung 20 aufgenommen ist. Die Ringkammer 25 wird durch eine die Bohrung 15 nach rechts hin abschließende erste Gegenfläche 27 für eine Dichtung 26 und die zum Deckel 17 gehörende zweite Gegenfläche, gegen welche eine weitere Dichtung 26 zur Anlage kommt, und durch die zweite Stufenfläche 23 begrenzt. Die durch die zweite Stufenfläche 23 im Verhältnis zur ersten Stufenfläche 22 und dritten Stufenfläche 24 erzeugte Vergrößerung dient zur axialen Halterung des Innenteils 21 im Verhältnis zum Gehäuse 14. Das Innenteil 21 ist ferner mit einem dritten Leitungsanschluß 29 versehen, der dazu dient, daß mittels einer Steckkupplung eine leitungsmäßige Verbindung mit einem Hauptventil 30 erzielbar ist, welches mit einem Anschluß 31 zum Druckerzeuger (Kompressor) versehen ist.

Die Steckkupplung kann in dem Leitungsanschluß 29 des Innenteiles 21 vorgesehen sein, aber auch im Bereich des Hauptventils 30 oder zwischen beiden liegen. Für den Fall, daß die Steckkupplung dem Hauptventil 30 zugeordnet ist, ist eine Anschlußleitung 32 vorgesehen, welche bei Montage des Rades mit einem Halter 33, der beispielsweise am Achsrohr befestigt ist, in Eingriff gebracht wird, so daß das Innenteil 21 bei montiertem Rad stillsteht, während das Gehäuse 14 mit dem Radkörper rotiert. Im Gehäuse 14 ist ferner ein zweiter Leitungsanschluß 11 vorgesehen, der das Ventil 9 mit der Ringkammer 25 verbindet. An das Ventil 9 ist wiederum die Leitung 12 angeschlossen, die zu dem ersten Leitungsanschluß 10 im Bereich der Felge, wie in Figur 1 dargestellt, führt. Ferner sind zwischen dem Gehäuse 14 und dem Innenteil 21 Schleifringaufnehmer 34, 35, 35a vorgesehen, die Steuerleitungen bzw. eine Stromversorgungsleitung und Masseleitung zum Ventil 9 mit einer Außenbetätigung bzw. dem Hauptventil 30 verbinden. Sofern eine Verbindung zur Masse über die Flanschverbindung zum Achsrohr gewährleistet ist, kann beispielsweise der dritte Schleifringaufnehmer 35a entfallen.

Um bei Rotation des Rades 1 beispielsweise eine Druckerhöhung im Reifen auszuführen, wird das Hauptventil 30 mit Strom beaufschlagt und die durch die über den Anschluß 31 und das Hauptventil 30 kommende Druckluft über die Anschlußleitung 32 in den dritten Leitungsanschluß 29 und von dort in die Ringkammer 25 geleitet. Da diese über den zweiten Anschluß 11 mit dem Ventil 9 verbunden ist, kann die Luft durch das bei Überschreiten eines bestimmten Druckes öffnende Ventil 9, das als Rückschlagventil gestaltet ist, über die Leitung 12 zu dem ersten Leitungsanschluß 10 und in den Reifen geleitet werden. Ist der Solldruck erreicht, schließt das Hauptventil 30 und öffnet dabei die Verbindung zur Atmosphäre, so daß die Ringkammer 25 drucklos wird.

Ist der Druck im Reifen zu hoch und soll verringert werden, wird das Ventil 9 mit Strom beaufschlagt, so daß es geöffnet wird. Die Luft kann dann entweder vom Ventil 9 unmittelbar über einen Kanal nach außen gelangen oder aber über die Ringkammer 25 zum Hauptventil 30 und von dort über einen Luftanschluß nach außen in die Atmosphäre gelangen. Ist der gewünschte Druck erreicht, wird das Ventil 9 stromlos geschaltet und damit geschlossen. Der vorgegebene Druck wird im Reifen gehalten. Sowohl das Hauptventil 30 als auch das Ventil 9 sind im Normalfall stromlos. Bei Stromausfall besteht damit keine Gefahr, daß ein Druckverlust im Reifen eintreten kann. Es kann dann aber auch kein Füllvorgang eingeleitet werden, so daß auch kein Überdruck entstehen kann. Vorzugsweise kommen als Ventile 9, 30 elektromagnetisch betätigte Ventile in Frage, was eine einfache Programmierung ermöglicht. Die Anlage kann auch so ausgelegt werden, daß ein automatischer Füll- und Entleerungsvorgang gewählt wird. Damit ist ein hoher Komfort mit einer großen Sicherheit gegen Fehlbedienung gegeben. So können beispielsweise für verschiedene Geräte die Druckverhältnisse für Arbeiten auf dem Acker als auch für die Straßenfahrt in einer Steuereinheit hinterlegt werden. Die Vorrichtung kann dann einfach aktiviert werden und es wird dann der jeweils gerätespezifizierte Druck für Straßenfahrt oder Fahrt auf dem Acker erzeugt. Für den Fall, daß eine permanente Drucküberwachung gewünscht wird, kann dies durch ein dem Ventil 9 zugeordnetes elektrisches Manometer erfolgen. Hierzu ist dann ein zusätzlicher Schleifring erforderlich. Bei der Permanentüberwachung kann auch eine lastabhängige Regelung genutzt werden.

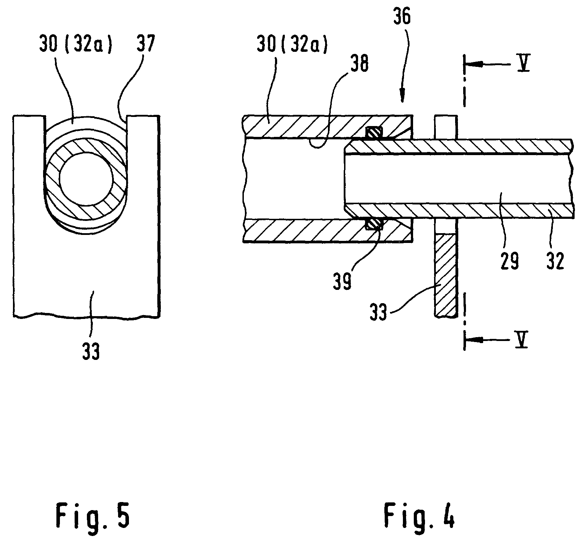

Die Figuren 4 und 5 zeigen im vergrößerten Maßstab die Verbindung mittels einer Steckkupplung 36. An dem Innenteil 21 ist die Anschlußleitung 32 in Form eines rohrförmigen Ansatzes ausgebildet, der den dritten Leitungsanschluß 29 umfaßt. Dieser ist in die Bohrung 38 einer entweder dem Hauptventil 30 unmittelbar zugehörigen rohrförmigen Muffe oder eines Anschlussleitungsabschnittes 32a eingesteckt und zu dieser über eine in der Bohrung 38 gehaltene Dichtung 39 abgedichtet. Zur Erleichterung des Einführens kann dazu in dem Anschlussleitungsabschnitt 32a eine kegelige Führungsfläche vorgesehen sein. Beim Montieren des Rades wird die Anschlußleitung 32 in die Ausnehmung 37 des Halters 33, der in diesem Bereich gabelartig gestaltet ist, eingeführt, so daß in Drehrichtung um die Drehachse 4 eine drehfeste Verbindung des Innenteiles 21 zum Achsrohr 5, an dem der Halter 33 befestigt ist, gegeben ist.

### Bezugszeichenliste

- 1: Rad
- 2: Felge
- 3: Radkörper
- 4: Drehachse
- 5: Achsrohr
- 6: Radflansch
- 7: Achswelle
- 8: Vorrichtung zum Befüllen oder Entlüften
- 9: Ventil
- 10: erster Leitungsanschluß
- 11: zweiter Leitungsanschluß
- 12: Leitung
- 13: Längsachse
- 14: Gehäuse
- 15: Bohrung
- 16: erste Lagerbohrung
- 17: Deckel
- 18: Dichtung
- 19: Sicherungsring
- 20: zweite Lagerbohrung
- 21: Innenteil
- 22: erste Stufenfläche
- 23: zweite Stufenfläche
- 24: dritte Stufenfläche
- 25: Ringkammer
- 26: Dichtung
- 27: erste Gegenfläche
- 28: zweite Gegenfläche
- 29: dritter Leitungsanschluß
- 30: Hauptventil
- 31: Anschluß
- 32, 32a: Anschlußleitung
- 33: Halter
- 34: Schleifringaufnehmer
- 35, 35a: Schleifringaufnehmer
- 36: Steckkupplung
- 37: Ausnehmung
- 38: Bohrung
- 39: Dichtung

## Patentansprüche

1. Anordnung umfassend
- ein Rad (1) für ein Fahrzeug, insbesondere Traktor, das eine Felge (2) aufweist, die zur Aufnahme eines mit Luft befüllbaren Reifens dient und dazu einen ersten Leitungsanschluß (10) zur Luftdurchleitung besitzt, das ferner einen Radkörper (3) aufweist, an dem die Felge (2) angebracht ist und der zur Verbindung mit einem Radflansch (6) des Fahrzeuges dient;
- eine Vorrichtung (8) zum Befüllen oder Entlüften des Reifens, die ein Gehäuse (14) aufweist, das mit dem Radkörper (3) fest verbunden ist, eine Bohrung (15) und einen zweiten Leitungsanschluß (11) besitzt, die ferner eine Leitung (12) aufweist, welche den ersten Leitungsanschluß (10) mit dem zweiten Leitungsanschluß (11) verbindet,
die weiter ein Innenteil (21) aufweist, welches in der Bohrung (15) des Gehäuses (14) drehbeweglich aufgenommen ist, welches ferner über einen dritten Leitungsanschluß (29) zur Verbindung mit einem Anschluß (31, 32, 30) zu einem Druckerzeuger verfügt und über Haltemittel (33) verfügt, die zur drehfesten Abstützung des Innenteiles am Fahrzeug bestimmt sind, die ferner ein steuerbares Ventil (9) aufweist, das dem zweiten Leitungsanschluß (11) zugeordnet ist,
wobei zwischen dem Gehäuse (14) und dem Innenteil (21) eine Ringkammer (25) ausgebildet ist, mit der der zweite Leitungsanschluß (11) und der dritte Leitungsanschluß (29) verbunden sind, und
wobei der dritte Leitungsanschluß (29) mit der zum Druckerzeuger führenden Leitung durch eine Steckkupplung und ein Hauptventil (30) verbunden ist.

2. Anordnung nach Anspruch 1,
**dadurch gekennzeichnet,**
**daß** das Ventil (9) elektrisch steuerbar ist, daß zwischen dem Gehäuse (14) und dem Innenteil (21) eine Übertragungseinheit (34, 35, 35a) für mit dem Ventil (9) verbundene Steuerleitungen vorhanden ist, welche über das Innenteil (21) nach außen zu dem Hauptventil und/oder einer Steuereinheit geführt sind.

3. Anordnung nach Anspruch 1,
**dadurch gekennzeichnet,**
**daß** der dritte Leitungsanschluß (29) mit einer Anschlußleitung (32) verbunden ist, die auch als eines der Haltemittel dient und mit einem Halter (33) als fahrzeugseitige Drehmomentstütze verbindbar ist.

4. Anordnung nach Anspruch 1,
**dadurch gekennzeichnet,**
**daß** das Gehäuse (14) ringförmig gestaltet ist.

5. Anordnung nach Anspruch 1,
**dadurch gekennzeichnet,**
**daß** das Gehäuse (14) mit dem Radkörper (3) lösbar verbunden ist.

6. Anordnung nach Anspruch 1,
**dadurch gekennzeichnet,**
**daß** die Vorrichtung (8) zum Befüllen oder Entlüften des Reifens an der dem Radflansch (6) zuzuordnenden Innenseite des Radkörpers (3) angebracht ist.

7. Anordnung nach Anspruch 1,
**dadurch gekennzeichnet,**
**daß** die Steckkupplung (36) zwischen der Anschlußleitung (32) und dem dritten Leitungsanschluß (29) angeordnet ist.

8. Anordnung nach Anspruch 1,
**dadurch gekennzeichnet,**
**daß** die Steckkupplung (36) zwischen dem Hauptventil (30) und der Anschlußleitung (32) vorgesehen ist.
